# EUROPEAN PATENT SPECIFICATION

(11) **EP 2 473 660 B1**
(45) Date of publication and mention of the grant of the patent: **11.11.2015**
(21) Application number: 10814444.5
(22) Date of filing: 01.09.2010
(51) Int. Cl.: B32B 5/26, D04H 3/00, D04H 5/00, D04H 3/14, D04H 13/00, B32B 7/02, B32B 5/02

(54) **TWO-SIDED HYDROPHILIC/HYDROPHOBIC NONWOVEN AND METHOD OF MANUFACTURING THEREOF**
ZWEISEITIGER HYDROPHILER/HYDROPHOBER VLIESSTOFF UND HERSTELLUNGSVERFAHREN DAFÜR
NON TISSÉ HYDROPHILE/HYDROPHOBE DOUBLE FACE ET SON PROCÉDÉ DE FABRICATION

(30) Priority: 03.09.2009 US 239560 P
(43) Date of publication of application: 11.07.2012
(73) Proprietor: First Quality Nonwovens, Inc., Great Neck, NY 11021 (US)
(72) Inventor: COSLETT, W., Andrew, Drums PA 18222 (US); KELLY, Lynda, A., Needham MA 02494 (US); PARSONS, John, C., Mountain Top PA 18707 (US)
(74) Representative: Manitz, Gerhart
(86) International application number: PCT/US2010/047566
(87) International publication number: WO 2011/028828

(56) References cited:
- EP-A2- 0 821 092
- WO-A1-96/33068
- WO-A1-2007/137609
- US-A- 5 145 727
- US-A1- 2003 068 947
- US-A1- 2004 116 028
- US-A1- 2006 084 344
- US-A1- 2009 135 813
- US-A1- 2009 156 079

## Description

### FIELD OF THE INVENTION

The present invention relates to nonwoven fabrics. More specifically, the present invention relates to a two-sided hydrophobic/hydrophilic nonwoven composite fabric, and a process of manufacturing thereof.

### BACKGROUND OF THE INVENTION

Some protective medical and industrial apparel, such as scrub suits, surgical gowns, and facemasks, are typically made from a nonwoven fabric that has good absorption and wicking properties on a surface facing the wearer, but which retains strong barrier properties on the outer facing surface. Conventionally, a two layer material is used in which a hydrophilic spunlaced nonwoven is combined with a hydrophobic spunbond nonwoven. The hydrophilic spunlaced nonwoven acts as the perspiration wicking layer, and the hydrophobic spunbond nonwoven acts as the outer barrier layer.

It is desired to produce a two-sided SMS (spunbond-meltblown-spunbond) nonwoven fabric to provide a simpler structure which will provide similar functionality and reduce production costs. Conventional SMS nonwoven fabrics are not suitable for this application, as an SMS nonwoven is typically comprised of a thermoplastic polymer, such as polypropylene, which causes the nonwoven to be naturally hydrophobic. As a result, the SMS nonwoven possesses sufficient barrier properties, but has negligible absorption properties.

There are known topical hydrophilic treatments for making a nonwoven fabric wettable to increase absorption, such as a surfactant treatment. However, topically applied surfactant treatments migrate to other layers in the SMS structure, making the entire structure wettable and unsuitable for this application. Moreover, topical treatments are not durable and lose their effectiveness over time.

Document WO 96/33068 A1 discloses a protective laminate having barrier properties, which has a first outer layer having liquid repellency through the use of an internal, low surface tension liquid repellency additive and a bulky second outer layer having liquid absorbency through the use of an internal wetting agent, where the layers are bonded to form a laminate.

Document EP 0 821 092 A2 discloses a composite nonwoven laminate fabric having differential softness and flexibility properties. The nonwoven laminate fabric includes a polypropylene meltblown web sandwiched between and bonded to a spunbonded web of polypropylene filaments and a spunbonded web of polyethylene filaments.

Document WO 2007/137609 A1 discloses an asymmetric multilayered non woven fabric which also provides fluid absorption properties. By being multilayered, the features of isolating against moisture in one direction and the permeability of fluids in the opposite direction are increased. The non woven fabric comprises: one or more layers of hydrophobic filaments which comprise a polyolefin; one or more layers of hydrophilic elements which comprise a mixture of a polyolefin and an additive or combination of additives.

It is an object of the present invention to provide a durable, two-sided SMS nonwoven fabric with improved wettability and fluid wicking on one surface while maintaining a repellant barrier on the outside. It is a further object of the present invention to provide a process of manufacturing such a nonwoven fabric.

### SUMMARY OF THE INVENTION

According to the invention, this object is solved by a nonwoven fabric having the features of claim 1.

In at least one embodiment, the nonwoven fabric has an absorbent capacity of about 300 to 500%.

In at least one embodiment, the nonwoven fabric has a hydrostatic head of at least 30 to 65 mbar when challenged from the hydrophobic outer surface.

In at least one embodiment, the nonwoven fabric has an air permeability of at least about 30 cfm.

In at least one embodiment, nonwoven fabric has a spunbond content of about 50 to 90% and meltblown content of about 10 to 50%.

In at least one embodiment, nonwoven fabric has a spunbond content of about 72 to 78% and a meltblown content of about 22 to 28%.

In at least one embodiment, the hydrophilic melt additive is included at a percent addition of about 4%

In at least one embodiment, the hydrophilic melt additive is non-migratory to the other layers of the fabric.

In at least one embodiment, the hydrophilic spunbond fibers are comprised of at least one of polypropylene, polyethylene, polyester, polyamide, and polylactic acid.

In at least one embodiment, the second and third layers are comprised of at least one of polypropylene, polyethylene, polyester, polyamide, and polylactic acid.

In at least one embodiment, the basis weight of the nonwoven fabric is between about 10 to 100 gsm.

In at least one embodiment, the basis weight of the nonwoven fabric is between about 34 to 68 gsm.

In at least one embodiment, the basis weight of the nonwoven fabric is between about 40 to 44 gsm.

According to one embodiment, an absorbent article comprises or a medical protective apparel comprises the nonwoven fabric according to claim 1.

The object of the invention is also solved by a process of manufacturing a nonwoven fabric according to claim 9.

In at least one embodiment, the hydrophilic melt additive is included at a percent addition of about 4%.

In at least one embodiment, the hydrophilic spunbond fibers are comprised of at least one of polypropylene, polyethylene, polyester, polyamide, polylactic acid.

In at least one embodiment, the second and third layers are comprised of at least one of polypropylene, polyethylene, polyester, polyamide, and polylactic acid.

In at least one embodiment, the hydrophobic fibers of the second layer include a hydrophobic melt additive.

In at least one embodiment, the nonwoven fabric has an absorbent capacity of about 300 to 500%.

In at least one embodiment, wherein the nonwoven fabric has a hydrostatic head of at least 30 to 65 mbar when challenged from the hydrophobic outer surface.

In at least one embodiment, wherein the nonwoven fabric has an air permeability of at least about 30 cfm.

In at least one embodiment, wherein nonwoven fabric has a spunbond content of about 50 to 90% and meltblown content of about 10 to 50%.

In at least one embodiment, nonwoven fabric has a spunbond content of about 72 to 78% and a meltblown content of about 22 to 28%.

In at least one embodiment, the basis weight of the nonwoven fabric is between about 10 to 100 gsm.

In at least one embodiment, the basis weight of the nonwoven fabric is between about 34 to 68 gsm.

In at least one embodiment, the basis weight of the nonwoven fabric is between about 40 to 44 gsm.

In at least one embodiment, one of the calender rolls is an engraved calender roll contacting an outer surface first layer and the other of the calender rolls is a smooth calender roll contacting an outer surface of the third layer.

These and other features of this invention are described in, or are apparent from, the following detailed description of various exemplary embodiments of this invention.

### BRIEF DESCRIPTION OF THE DRAWINGS

Example embodiments of this invention will be described with reference to the accompanying figures.
FIG. 1 is a cross sectional view of a nonwoven fabric according to one embodiment of the present invention.
FIG. 2 is a schematic view of a process of manufacturing a nonwoven fabric according to one embodiment of the present invention.

### DETAILED DESCRIPTION OF THE EXAMPLE EMBODIMENTS

As used herein, "nonwoven fabric, sheet, layer or web" means a structure of individual fibers, filaments, or threads that are positioned in a substantially random manner to form a planar material, as opposed to a knitted or woven fabric. Examples of nonwoven fabrics include meltblown webs, spunbond webs, carded webs, air-laid webs, wet-laid webs, and spunlaced webs. A nonwoven composite fabric comprises more than one nonwoven layer.

As used herein, "spunbond fibers" means fibers that have an average cross section diameter of greater than 10 µm. Spunbond webs are formed by laying spunbond fibers randomly on a collecting surface, and subsequently bonding the fibers, such as by thermal bonding, hydroentanglement, or the like.

As used herein, "meltblown fibers" means fibers that have an average cross sectional diameter of less than about 10 µm. Meltblown webs are formed by laying meltblown fibers randomly on a collecting surface, and bonding, such as by thermal bonding, hydroentanglement, or the like.

As used herein, "spunbond fibers" and "meltblown fibers" are preferably substantially continuous fibers but are not limited thereto. For example, staple fibers or carded fibers may be used instead or in conjunction with substantially continuous fibers.

As used herein, an "SMS nonwoven fabric" refers to a multi-layer composite fabric comprising a layer of meltblown fibers bonded between two layers of spunbond fibers (e.g., a spunbond-meltblown-spunbond). The SMS nonwoven fabric can include multiple layers of spunbond or meltblown fibers, such as an SMMS (spunbond-meltblown-meltblown-spunbond), SMSS (spundbond-meltblown-spunbond-spunbond), or the like.

The present invention is a two-sided hydrophobic/hydrophilic nonwoven composite fabric, and a process of manufacturing thereof.

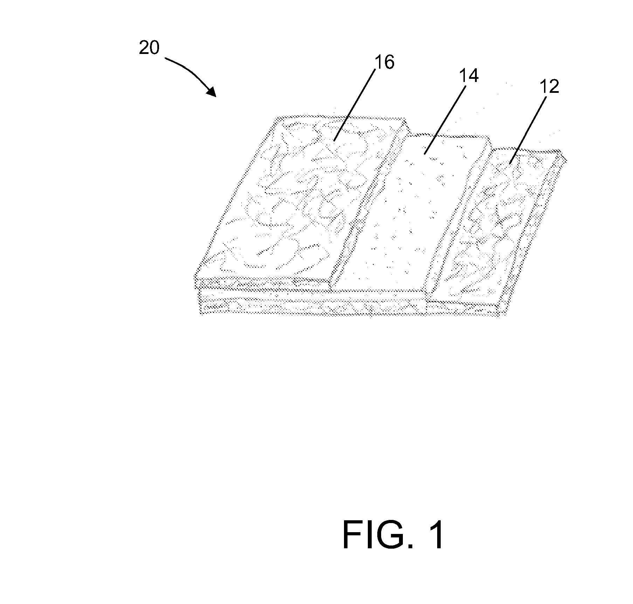

Referring to FIG. 1, according to one exemplary embodiment of the present invention, a nonwoven fabric 20 is formed in a composite SMS configuration, wherein at least one meltblown layer 14 is laminated between a first spunbond layer 12 and a second spunbond layer 16. One side of the nonwoven is hydrophilic and exhibits good wettability and absorption properties, while the opposite side is hydrophobic and non-wetting. The entire structure exhibits barrier properties when challenged at the hydrophobic side.

The fibers of the spunbond and meltblown layers may be comprised of a thermoplastic polymer, which may be one of various homopolymers, copolymers, and terpolymers. For example, the polymer may be polypropylene, polyethylene, polyester, polyamide, or the like. The polymer may also be a renewable material, such as polylactic acid (PLA). The fibers may be configured as single component fibers or multicomponent fibers consisting of two or more polymers, such as in a blend, a sheath/core configuration, a side-by-side configuration, or other known configuration.

In the case of a blend of two polymers, it is preferred that one of the components be the majority component and the other be the minority component. In such instances, numerous polymers may serve as the majority and minority components. It is preferred that the fibers of the spunbond layers are comprised of a blend in which the minority component is a polypropylene resin, such as ExxonMobil SFT-315, ExxonMobil SFT-325, ExxonMobil PP-3155, LyondellBasell PH 835, Total 3866, or the like, and the majority component is polypropylene copolymer resin, such as Moplen RP348S, Moplen RP349S, Sunoco TR3350C, Total 7847MR, or the like. It is preferred that the fibers of the meltblown layers are comprised of a polypropylene resin, such as ExxonMobil 6936G, ExxonMobil 3746G, LyondellBasell 650Y, or the like. Blends with more than two polymers may also be employed. The additional polymers may have an effect on the properties of the blend, for example, blend compatibility, viscosity, or the like.

The nonwoven fabric may have a basis weight of about 10-100 gsm, more preferably about 34-68 gsm, and still more preferably about 40-44 gsm. The nonwoven fabric may have a spunbond content of about 50- 90% and meltblown content of about 10-50%, more preferably a spunbond content of about 72-78% and a meltblown content of about 22-28%.

A hydrophilic melt additive is included in the fibers of the first spunbond layer to increase wettability and absorption properties. The hydrophilic melt additive is non-migratory so that it is retained only in the hydrophilic spunbond layer of the fabric. For example, the hydrophilic melt additive may be a surface modifier, such as Techmer TPM12713 manufactured by Techmer PM, LLC, Irgasurf® HL 560 manufactured by Ciba®, or the like. The hydrophilic melt additive is included at a percent addition of about 2.5 to 6%, and preferably at about 3 to 4%.

A hydrophobic melt additive is included in the fibers of the meltblown layer and optionally the opposite spunbond layer, to increase the repellency to fluid penetration through the nonwoven fabric. For example, the melt additive may be a fluoropolymer, such as, Goulston A202M and Goulston A202S, both manufactured by Goulston Technologies, Inc., which can be used for the meltblown layer and the opposite spunbond layer, respectively. The meltblown layer includes the hydrophobic melt additive at a percent addition of about 5 to 10%, and preferably at about 8 to 10%. The opposite spunbond layer preferably includes the hydrophobic melt additive at a percent addition of about 2 to 5%, and more preferably at about 3-4%.

A naturally hydrophobic material, for example, polypropylene, may be used as the basis for the fibers for any of the layers of the nonwoven. A slightly more hydroscopic material, for example, PLA, would be preferable for use in the hydrophilic spunbond layer rather than the hydrophobic barrier layers due to the affinity of hydroscopic materials for absorbing at least some water. However, a slightly more hydroscopic material may be used for the barrier layers if made hydrophobic, such as through the use of hydrophobic additives or treatments.

Other compatible additives that have a desired effect on the properties of the nonwoven fabric may be included in the fibers. For example, the fibers may include tackifiers, surfactants, plasticizers, stabilizers, anti-statics, alcohol-repellants, anti-microbials, colorants, and the like. Topical treatments may also be applied to the fibers of the nonwoven fabric to obtain the desired properties.

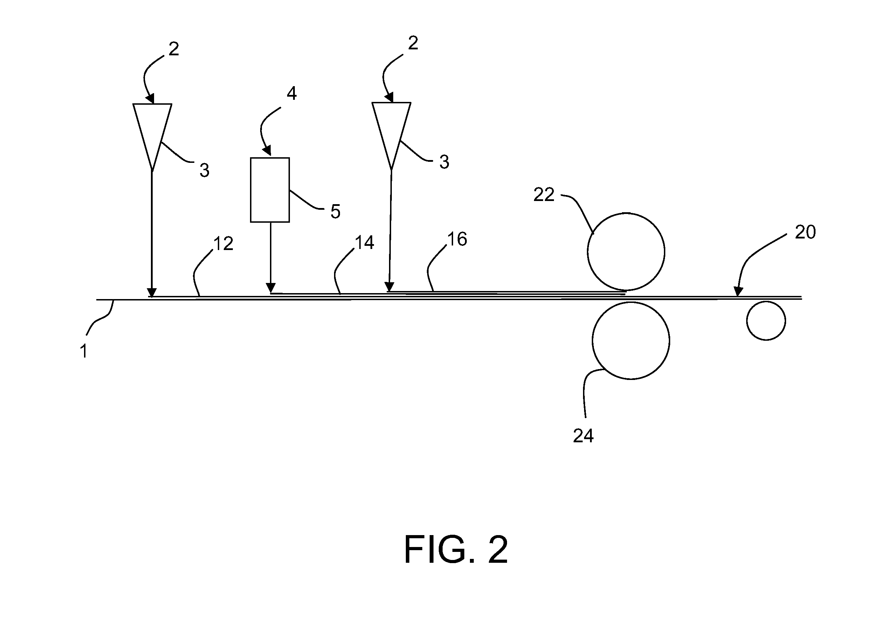

FIG. 2 illustrates a process of manufacturing a nonwoven fabric 20 according to an exemplary embodiments of the present invention.

In one embodiment, the SMS nonwoven fabric is be formed in-line by sequentially depositing a first layer of spunbond fibers 12 on a moving collecting surface 1, a layer of meltblown fibers 14 over the first layer of spunbond fibers 12, and then a second layer of spunbond fibers 16 over the layer of meltblown fibers 14. The assembled layers may be laminated together, such as by calendering.

In another embodiment, the individual spunbond and meltblown layers are preformed, optionally bonded or entangled, and collected as individual sheets, such as by winding the sheets on wind-up rolls. The individual sheets can be subsequently assembled by layering and then laminated together to form the SMS nonwoven fabric.

The spunbond layers 12 and 16 can be spun-melt, but may be formed by a variety of other processes known in the art. The spun-melting process comprises inserting a polymer material 2 into a spinneret 3. A hydrophilic or hydrophobic melt additive may be added to the polymer 2. The thermoplastic polymer material 2 is extruded through a plurality of fine capillaries in the spinneret 3 to form fibers. The diameter of the fibers are rapidly reduced by air quenching and drawing, and quasi-randomly deposited on a collecting surface 1 to form a spunbond web. Multiple spinnerets or beams may be used to provide an increased density of spunbond fibers.

The meltblown layer 14 can be formed by meltblowing. The meltblowing process comprises inserting a polymer material 4 into a die 5. A hydrophobic melt additive is added into the polymer material 4. The polymer material is extruded through a plurality of fine capillaries in the die 5 to form fibers. The fibers stream into a high velocity gas (e.g. air) stream which attenuates the streams of molten thermoplastic polymer material to reduce their diameter, which may be to the microfiber diameter. The meltblown fibers are quasi-randomly deposited over the spunbond layer 12 to form a meltblown layer. Multiple dies or beams may be used to provide an increased density of meltblown fibers. If multiple beams are used, the average fiber diameter may be varied between beams, for example to create a gradient. The meltblown fibers can be tacky when they are deposited, which generally results in some bonding between the meltblown fibers of the web. Subsequently, the second spunbond layer 16 is deposited over the meltblown layer 14.

The layers 12, 14, 16 may be calendered by being passed through a calender nip between a heated smooth calender roll 22 and a heated patterned calender roll 24. The patterned calender roll 22 forms a bond pattern including a plurality of bonding points 120. The bonding points 120 give web strength to the nonwoven, as well as providing adhesion between the layers to prevent delamination.

The bond pattern may, for example, be a non-symmetrical pattern of fusion bonds. Commonly owned U.S. Patent Nos. 6,537,644, 6,610,390, and 6,872,274 disclose nonwoven fabrics having a non-symmetrical pattern of fusion bonds (that is, an anisotropic or asymmetrical pattern). The bonds may be simple fusion bonds or closed figures elongated in one direction. The bonds may be closed figures elongated in one direction and selected from the group consisting of closed figures (a) oriented in parallel along the one direction axis, (b) oriented transverse to adjacent closed figures along the one direction axis, and (c) oriented sets with proximate closed figures so as to form there between a closed configuration elongated along the one direction axis. The PILLOW BOND® pattern available from First Quality Nonwovens, Inc. is an example of one such non-symmetrical pattern of fusion bonds.

After bonding, the nonwoven fabric 20 may be treated with a finish at a finishing station to render it softer and more condrapable, such a finish being disclosed in U.S. Patent No. 6,632,385, or to modify the surface energy thereof and thereby render it either more hydrophobic or more hydrophilic.

The nonwoven fabric of the present invention may find utility in a wide variety of industrial, medical, and hygiene applications. For example, the nonwoven fabric may be useful in medical and industrial protective clothing, scrub suits, surgical gowns, surgical drapes, facemasks and the like, in which the hydrophilic side placed toward the body of the user provides improved perspiration and fluid wicking, while the hydrophobic side maintains a repellent barrier on the outside away from the user. The nonwoven fabric may also find similar utility in absorbent articles, such as in backsheets and leg cuffs.

The nonwoven fabric further may be useful as cleaning wipes and substrates in which the hydrophilic side absorbs a spilled liquid or contains a cleaning solution, while the hydrophobic side is kept dry to the touch.

Other industrial applications for the nonwoven fabric may include central supply room (CSR) wrapping, packaging, furniture and bedding, shoe components and the like.

The specification of particular applications hereinabove is to be taken as exemplary only, and not to be limiting or to be inclusive of all the potential applications. Uses other than the aforementioned industrial, hygiene and medical applications follow naturally from the physical and chemical properties of the materials of the present invention.

### EXAMPLES

In the examples that follow, the following test methods were employed to determine various reported characteristics and properties.

Basis weight is a measure of the mass per unit area of the fabric. Basis weight and was measured by ASTM D-6242-98 and is reported in g/m² (gsm).

Air permeability is a measure of air flow passing through a fabric under a stated pressure differential between the surfaces of the fabric. Air permeability was measured according to ASTM D753 and is reported in ft³/min (cfm).

Hydrostatic head is a measure of the pressure of a liquid that the fabric can support when challenged from the hydrophobic side. Hydrostatic head was determined according to INDA 80.6-98 and is reported in mbar.

Grab tensile strength is a measure of the maximum force needed to break a material. Grab tensile strength was calculated in the cross direction (CD) and determined according to ASTM 5034 and is reported in lbf.

Trapezoidal tear strength is a measure of the ability to resist a continued tear across the fabric. Trapezoidal tear strength was calculated in the machine direction (MD) and determined according to ASTM 5733 and is reported in lbf.

Electrostatic decay is a measure of the electrostatic properties of a material by measuring the time required for dissipating a charge from the surface of the material. Electrostatic decay was measured according to INDA WSP 40.2 and is reported in seconds.

Absorptive capacity is a measure of the capacity of a material to absorb liquid over a period of time and is related to the total amount of liquid held by a material at its point of saturation. The absorptive capacity is calculated as the weight of liquid absorbed divided by the weight of the dry sample. Absorptive capacity is determined according to EDANA ERT 10.4-02 and is reported as a percentage.

Used as a control was a conventional 44.1 gsm basis weight polypropylene SMS nonwoven fabric, available from First Quality Nonwovens, Inc. under the trade name of 441SM0001. Also tested as a control was a 44.1 gsm basis weight polypropylene SMS nonwoven, available from First Quality Nonwovens, Inc. under the trade name of KAZZMERE™.

The examples of the SMS nonwoven fabric prepared according to the present invention were formed in a similar manner as the Kazzmere™ nonwoven, but which included in the hydrophilic spunbond layer a percent addition of 4% of a hydrophilic melt additive, available from Techmer PM, LLC under the trade name of Techmer TPM12713. The samples of Example 2 differed from Example 1 in that the colorant was removed from the hydrophilic spunbond layer. The nonwoven fabric in the examples had a basis weight of 44.1 gsm.

The averaged results are illustrated in the Table I below:

**TABLE 1**

| Comparative Properties of Example SMS Nonwoven Fabric | | | | | | | |
|---|---|---|---|---|---|---|---|
| Example No. | Basis Weight (gsm) | Air Perm. (cfm) | Hydrostatic Head (mbar) | CD Grab Tensile (lb) | MD Trapezoidal Tear (lb) | CD Electrostatic Decay, 50% RH (sec.) | Absorptive capacity (%) |
| SMS 441SM0001 | 44.1 | 50 | 75 | 18.0 | 8.0 | No charge | 21.2 |
| SMS Kazzmere™ | 44.1 | 55 | 70 | 18.0 | 8.0 | No charge | 12.8 |
| Example 1 | 44.1 | 60 | 60 | 18.0 | 8.0 | | 350 |
| Example 2 | 45.3 | 57 | 65 | 15.6 | 8.0 | 0.6 | 465 |

The data of TABLE 1 shows that the SMS nonwoven fabric according to the present invention provided a significant improvement in absorptive capacity as compared to the conventional SMS nonwoven fabrics, while retaining similar air permeability and hydrostatic head properties. The SMS nonwoven fabric according to the present invention also surprisingly exhibited electrostatic decay properties. Further, the SMS nonwoven fabric according to the present invention exhibited similar tensile strength, and tear strength as compared to the conventional SMS nonwoven fabrics.

For barrier protection, a hydrostatic head of at least 50 mbar (AAMI3) is typically considered acceptable for a disposable barrier garment such as a surgical gown, surgical drape, or the like. Special applications may require a higher head or permit a lower head. For wearing comfort, an air permeability prior to liquid insult of at about 20-150 cfm is typically considered acceptable for a disposable barrier product, such as a surgical gown, drape, etc. Each of the various embodiments of the SMS nonwoven fabric according to the present invention is capable of meeting both of these wearing comfort and barrier protection criteria.

It was observed that in the absorbency test of the conventional SMS nonwoven fabrics, water droplets remained on the surface of the fabric rather than being absorbed into the fibers, which contributed to the absorbency values listed. In contrast, the SMS nonwoven fabric of the present invention was fully wetted out on the hydrophilic side, while still retaining barrier properties on the hydrophilic side.

To summarize, the present invention provides a nonwoven fabric which affords increased absorptive properties and comfort, but which also delivers high levels of barrier protection. The nonwoven fabric achieves this by demonstrating hydrophilic properties on one side, while retaining hydrophobic properties at the opposing side. The hydrophilicity is imparted by a hydrophilic additive which is durable so that the hydrophilicity does not diminish with increased wettings, and which is non-migratory to retain the hydrophobicity of the other parts of the structure of the nonwoven fabric.

Now that embodiments of the present invention have been shown and described in detail, various modifications and improvements thereon will become readily apparent to those skilled in the art.

## Claims

1. A nonwoven fabric (20) comprising:
a first layer (12) comprising hydrophilic spunbond fibers including a hydrophilic melt additive which is non-migratory to the other layers of this fabric and which is included at a percent addition of 2.5 to 6%, the first layer (12) forming at least one exposed outer surface of the nonwoven fabric (20);
a second layer (16) comprising hydrophobic spunbond fibers, the second layer (16) forming an opposite exposed outer surface of the nonwoven fabric (20); and
a third layer (14) comprising meltblown fibers interposed between the first and second layers, the third layer (14) further comprising a hydrophobic melt additive, which is included at a percent addition of 5 to 10%;
wherein the nonwoven fabric (20) has an absorptive capacity of 100% to 500% and a hydrostatic head of at least 30 mbar when challenged from the hydrophilic outer surface.

2. The nonwoven fabric (20) of claim 1, wherein the nonwoven fabric (20) has a hydrostatic head of at least 30 to 65 mbar when challenged from the hydrophobic outer surface.

3. The nonwoven fabric (20) of claim 1, wherein the nonwoven fabric (20) has an air permeability of at least about 30 cfm.

4. The nonwoven fabric (20) of claim 1, wherein the nonwoven fabric (20) has a spunbond content of about 50 to 90% and a meltblown content of about 10 to 50%, particularly a spunbond content of about 72 to 78% and a meltblown content of about 22 to 28%.

5. The nonwoven fabric (20) of claim 1, wherein the hydrophilic melt additive is included in the first layer (12) at a percent addition of about 3 to 4%.

6. The nonwoven fabric (20) of claim 1, wherein the hydrophilic spunbond fibers are comprised of at least one of polypropylene, polyethylene, polyester, polyamide, and polylactic acid;
and/or
wherein the second and third layers (14, 16) are comprised of at least one of polypropylene, polyethylene, polyester, polyamide, and polylactic acid.

7. The nonwoven fabric (20) of claim 1, wherein the basis weight of the nonwoven fabric (20) is between about 10 to 100 gsm, particularly between about 34 to 68 gsm, preferably between about 40 to 44 gsm.

8. An absorbent article or a medical protective apparel comprising the nonwoven fabric (20) of claim 1.

9. A process of manufacturing a nonwoven fabric (20), the process comprising:
forming a first layer (12) comprising hydrophilic spunbond fibers including a hydrophilic melt additive which is non-migratory to the other layers of this fabric, and which is included at a percent addition of 2.5 to 6%,;
forming a second layer (14) comprising hydrophobic meltblown fibers disposed over the first layer, the second layer (14) further comprising a hydrophobic melt additive, which is included at a percent addition of 5 to 10%;
forming a third layer (16) comprising hydrophobic spunbond fibers disposed over the second layer (14),; and
calendering the first, second, and third layers (12, 14, 16) between two calender rolls (22, 24),
wherein the nonwoven fabric (20) has an absorptive capacity of 100% to 500% and a hydrostatic head of at least 30 mbar when challenged from the hydrophilic outer surface.

10. The process of claim 9, wherein the hydrophilic melt additive is included in the first layer (12) at a percent addition of about 3 to 4%.

11. The process of claim 9, wherein the hydrophilic spunbond fibers are comprised of at least one of polypropylene, polyethylene, polyester, polyamide, and polylactic acid,
and/or
wherein the second and third layers (14, 16) are comprised of at least one of polypropylene, polyethylene, polyester, polyamide, and polylactic acid,
and/or
wherein the hydrophobic fibers of the third layer (16) include a hydrophobic melt additive.

12. The process of claim 9,
wherein the nonwoven fabric (20) has a hydrostatic head of at least 30 to 65 mbar when challenged from the hydrophobic outer surface.

13. The process of claim 9, wherein the nonwoven fabric (20) has an air permeability of at least about 30 cfm.

14. The process of claim 9, wherein the nonwoven fabric (20) has a spunbond content of about 50 to 90% and a meltblown content of about 10 to 50%, particularly a spunbond content of about 72 to 78% and a meltblown content of about 22 to 28%.

15. The process of claim 9, wherein the basis weight of the nonwoven fabric (20) is between about 10 to 100 gsm, particularly between about 34 to 68 gsm, preferably between about 40 to 44 gsm.

16. The process of claim 9, wherein one of the calender rolls is an engraved calender roll (24) contacting an outer surface first layer (12) and the other of the calender rolls is a smooth calender roll (22) contacting an outer surface of the third layer (16).

## Patentansprüche

1. Textilverbundstoff (20), umfassend:
eine erste Schicht (12), die hydrophile Spinnvliesfasern umfasst, welche einen hydrophilen Schmelzzusatz enthalten, der nicht in die anderen Schichten dieses Stoffs wandert und der mit einer prozentualen Beigabe von 2,5 bis 6 % enthalten ist, wobei die erste Schicht (12) mindestens eine freiliegende Außenoberfläche des Textilverbundstoffs (20) ausbildet;
eine zweite Schicht (16), die hydrophobe Spinnvliesfasern umfasst, wobei die zweite Schicht (16) eine entgegengesetzte freiliegende Außenoberfläche des Textilverbundstoffs (20) ausbildet; und
eine dritte Schicht (14), die heißluftgezogene Fasern umfasst, welche zwischen der ersten und der zweiten Schicht angeordnet ist, wobei die dritte Schicht (14) ferner einen hydrophoben Schmelzzusatz umfasst, der mit einer prozentuellen Beigabe von 5 bis 10 % enthalten ist;
wobei der Textilverbundstoff (20) ein Absorptionsvermögen von 100 % bis 500 % und eine Wassersäule von mindestens 30 mbar aufweist, wenn er von der hydrophilen Außenoberfläche aus belastet wird.

2. Textilverbundstoff (20) nach Anspruch 1,
wobei der Textilverbundstoff (20) eine Wassersäule von mindestens 30 bis 65 mbar aufweist, wenn er von der hydrophoben Außenoberfläche aus belastet wird.

3. Textilverbundstoff (20) nach Anspruch 1,
wobei der Textilverbundstoff (20) eine Luftdurchlässigkeit von mindestens etwa 30 cfm aufweist.

4. Textilverbundstoff (20) nach Anspruch 1,
wobei der Textilverbundstoff (20) einen Spinnvliesanteil von etwa 50 bis 90 % und einen heißluftgezogenen Anteil von etwa 10 bis 50 % aufweist, speziell einen Spinnvliesanteil von etwa 72 bis 78 % und einen heißluftgezogenen Anteil von etwa 22 bis 28 %.

5. Textilverbundstoff (20) nach Anspruch 1,
wobei der hydrophile Schmelzzusatz in der ersten Schicht (12) mit einer prozentualen Beigabe von etwa 3 bis 4 % enthalten ist.

6. Textilverbundstoff (20) nach Anspruch 1,
wobei die hydrophilen Spinnvliesfasern aus Polypropylen, Polyethylen, Polyester, Polyamid und/oder Polymilchsäure bestehen;
und/oder
wobei die zweite und die dritte Schicht (14, 16) aus Polypropylen, Polyethylen, Polyester, Polyamid und/oder Polymilchsäure bestehen.

7. Textilverbundstoff (20) nach Anspruch 1,
wobei das Grundgewicht des Textilverbundstoffs (20) zwischen etwa 10 und 100 gsm liegt, insbesondere zwischen etwa 34 und 68 gsm, vorzugsweise zwischen etwa 40 und 44 gsm.

8. Absorptionsartikel oder medizinische Schutzbekleidung, die den Textilverbundstoff (20) von Anspruch 1 umfasst.

9. Verfahren zum Herstellen eines Textilverbundstoffs (20), wobei das Verfahren umfasst, dass:
eine erste Schicht (12) ausgebildet wird, welche hydrophile Spinnvliesfasern umfasst, die einen hydrophilen Schmelzzusatz enthalten, der nicht in die anderen Schichten dieses Stoffs wandert, und der mit einer prozentualen Beigabe von 2,5 bis 6 % enthalten ist;
eine zweite Schicht (14) ausgebildet wird, die hydrophobe heißluftgezogene Fasern umfasst, welche über der ersten Schicht angeordnet werden, wobei die zweite Schicht (14) ferner einen hydrophoben Schmelzzusatz umfasst, der mit einer prozentualen Beigabe von 5 bis 10 % enthalten ist;
eine dritte Schicht (16) ausgebildet wird, die hydrophobe Spinnvliesfasern umfasst, welche über der zweiten Schicht (14) angeordnet werden; und
die erste, zweite und dritte Schicht (12, 14, 16) zwischen zwei Kalandrierungsrollen (22, 24) kalandriert werden,
wobei der Textilverbundstoff (20) ein Absorptionsvermögen von 100 % bis 500 % und eine Wassersäule von mindestens 30 mbar aufweist, wenn er von der hydrophilen Außenoberfläche aus belastet wird.

10. Verfahren nach Anspruch 9,
wobei der hydrophile Schmelzzusatz in der ersten Schicht (12) mit einer prozentualen Beigabe von etwa 3 bis 4 % enthalten ist.

11. Verfahren nach Anspruch 9,
wobei die hydrophilen Spinnvliesfasern aus Polypropylen, Polyethylen, Polyester, Polyamid und/oder Polymilchsäure bestehen,
und/oder
wobei die zweite und die dritte Schicht (14, 16) aus Polypropylen, Polyethylen, Polyester, Polyamid und/oder Polymilchsäure bestehen,
und/oder
wobei die hydrophoben Fasern der dritten Schicht (16) einen hydrophoben Schmelzzusatz enthalten.

12. Verfahren nach Anspruch 9,
wobei der Textilverbundstoff (20) eine Wassersäule von mindestens 30 bis 65 mbar aufweist, wenn er von der hydrophoben Außenoberfläche aus belastet wird.

13. Verfahren nach Anspruch 9,
wobei der Textilverbundstoff (20) eine Luftdurchlässigkeit von mindestens etwa 30 cfm aufweist.

14. Verfahren nach Anspruch 9,
wobei der Textilverbundstoff (20) einen Spinnvliesanteil von etwa 50 bis 90 % und einen heißluftgezogenen Anteil von etwa 10 bis 50 % aufweist, insbesondere einen Spinnvliesanteil von etwa 72 bis 78 % und einen heißluftgezogenen Anteil von etwa 22 bis 28 %.

15. Verfahren nach Anspruch 9,
wobei das Grundgewicht des Textilverbundstoffs (20) zwischen etwa 10 und 100 gsm liegt, insbesondere zwischen etwa 34 und 68 gsm, vorzugsweise zwischen etwa 40 und 44 gsm.

16. Verfahren nach Anspruch 9,
wobei eine der Kalandrierungsrollen eine gravierte Kalandrierungsrolle (24) ist, welche eine Außenoberfläche der ersten Schicht (12) kontaktiert, und die andere der Kalandrierungsrollen eine glatte Kalandrierungsrolle (22) ist, die eine Außenoberfläche der dritten Schicht (16) kontaktiert.

## Revendications

1. Tissu non-tissé (20) comprenant :
une première couche (12) comprenant des fibres hydrophiles filées-liées incluant un additif de fusion hydrophile qui n'est pas capable de migrer vers les autres couches de ce tissu et qui est inclus avec un pourcentage d'addition de 2,5 à 6 %, la première couche (12) formant au moins une surface extérieure exposée du tissu non-tissé (20) ;
une seconde couche (16) comprenant des fibres hydrophobes filées-liées, la seconde couche (16) formant une surface extérieure exposée à l'opposé du tissu non-tissé (20) ; et
une troisième couche (14) comprenant des fibres soufflées en fusion interposée entre la première et la seconde couche, la troisième couche (14) comprenant en outre un additif de fusion hydrophobe, qui est inclus avec un pourcentage d'addition de 5 à 10 % ;
dans lequel le tissu non-tissé (20) a une capacité d'absorption de 100 % à 500 %, et une pression hydrostatique d'au moins 30 mbar lorsqu'il est sollicité depuis la surface extérieure hydrophile.

2. Tissu non-tissé (20) selon la revendication 1, dans lequel le tissu non-tissé (20) présente une pression hydrostatique d'au moins 30 à 65 mbar lorsqu'il est sollicité depuis la surface extérieure hydrophobe.

3. Tissu non-tissé (20) selon la revendication 1, dans lequel le tissu non-tissé (20) a une perméabilité à l'air d'au moins environ 30 cfm.

4. Tissu non-tissé (20) selon la revendication 1, dans lequel le tissu non-tissé (20) a une teneur de fibres filées-liées d'environ 50 à 90 % et une teneur de fibres soufflées en fusion d'environ 10 à 50 %, en particulier une teneur de fibres filées-liées d'environ 72 à 78 %, et une teneur de fibres soufflées en fusion d'environ 22 à 28 %.

5. Tissu non-tissé (20) selon la revendication 1, dans lequel l'additif de fusion hydrophile est inclus dans la première couche (12) avec un pourcentage d'addition d'environ 3 à 4 %.

6. Tissu non-tissé (20) selon la revendication 1, dans lequel les fibres filées-liées hydrophiles sont constituées d'au moins un produit parmi polypropylène, polyéthylène, polyester, polyamide, et acide polylactique ;
et/ou
dans lequel la seconde et la troisième couche (14, 16) sont constituées d'au moins un produit parmi polypropylène, polyéthylène, polyester, polyamide, et acide polylactique.

7. Tissu non-tissé (20) selon la revendication 1, dans lequel le poids de base du tissu non-tissé (20) est entre environ 10 et 100 gsm, en particulier entre environ 34 et 68 gsm, et de préférence entre environ 40 et 44 gsm.

8. Article absorbant ou appareil médical protecteur comprenant le tissu non-tissé (20) selon la revendication 1.

9. Procédé de fabrication d'un tissu non-tissé (20), le procédé comprenant les étapes consistant à :
former une première couche (12) comprenant des fibres hydrophiles filées-liées incluant un additif de fusion hydrophile qui n'est pas capable de migrer vers les autres couches de ce tissu, et qui est inclus avec un pourcentage d'addition de 2,5 à 6 % ;
former une seconde couche (14) comprenant des fibres hydrophobes filées-liées disposée par-dessus la première couche, la seconde couche (14) comprenant en outre un additif de fusion hydrophobe, qui est inclus avec un pourcentage d'addition de 5 à 10 % ;
former une troisième couche (16) comprenant des fibres hydrophobes filées-liées disposée par-dessus la seconde couche (14) ; et
calandrer la première, la seconde et la troisième couche (12, 14, 16) entre deux cylindres de calandrage (22, 24),
dans lequel le tissu non-tissé (20) a une capacité d'absorption de 100 % à 500 % et une pression hydrostatique d'au moins 30 mbar lorsqu'il est sollicité depuis la surface extérieure hydrophile.

10. Procédé selon la revendication 9, dans lequel l'additif de fusion hydrophile est inclus dans la première couche (12) avec un pourcentage d'addition d'environ 3 à 4 %.

11. Procédé selon la revendication 9, dans lequel les fibres hydrophiles filées-liées sont constituées d'au moins un produit parmi polypropylène, polyéthylène, polyester, polyamide, et acide polylactique,
et/ou
dans lequel la seconde et la troisième couche (14, 16) sont constituées d'au moins un produit parmi polypropylène, polyéthylène, polyester, polyamide, et acide polylactique,
et/ou
dans lequel les fibres hydrophobes de la troisième couche (16) incluent un additif de fusion hydrophobe.

12. Procédé selon la revendication 9,
dans lequel le tissu non-tissé (20) présente une pression hydrostatique d'au moins 30 à 65 mbar lorsqu'il est sollicité depuis la surface extérieure hydrophobe.

13. Procédé selon la revendication 9, dans lequel le tissu non-tissé (20) a une perméabilité à l'air d'au moins environ 30 cfm.

14. Procédé selon la revendication 9, dans lequel le tissu non-tissé (20) a une teneur de fibres filées-liées d'environ 50 à 90 %, et une teneur de fibres soufflées en fusion d'environ 10 à 50 %, en particulier une teneur de fibres filées-liées d'environ 72 à 78 %, et une teneur en fibres soufflées en fusion d'environ 22 à 28 %.

15. Procédé selon la revendication 9, dans lequel le poids de base du tissu non-tissé (20) est entre environ 10 et 100 gsm, en particulier entre environ 34 et 68 gsm, et de préférence entre environ 40 et 44 gsm.

16. Procédé selon la revendication 9, dans lequel l'un des cylindres de calandrage est un cylindre de calandrage gravé (24) en contact avec une surface extérieure de la première couche (12), et l'autre des cylindres de calandrage est un cylindre de calandrage lisse (22) en contact avec une surface extérieure de la troisième couche (16).
